# FASCICULE DE BREVET EUROPEEN

(11) **EP 3 274 782 B1**
(45) Date de publication et mention de la délivrance du brevet: **01.05.2019**
(21) Numéro de dépôt: 16717984.5
(22) Date de dépôt: 24.03.2016
(51) Int. Cl.: G05D 7/06, F03H 1/00, F02K 9/58, B64G 1/40

(54) **DISPOSITIF ET PROCEDE DE REGULATION DE DEBIT**
VORRICHTUNG UND VERFAHREN ZUR DURCHFLUSSREGELUNG
APPARATUS AND METHOD FOR FLUID FLOW CONTROL

(30) Priorité: 25.03.2015 FR 1552500
(43) Date de publication de la demande: 31.01.2018
(73) Titulaire: SAFRAN AIRCRAFT ENGINES, 75015 Paris (FR)
(72) Inventeur: ZURBACH, Stéphan, 27200 Vernon (FR); RABIN, Julien, 78210 Saint Cyr L'Ecole (FR); ÖBERG, Michael, 27940 Port Mort (FR)
(74) Mandataire: Cabinet Beau de Loménie
(86) Numéro de dépôt international: PCT/FR2016/050648
(87) Numéro de publication internationale: WO 2016/151251

(56) Documents cités:
- WO-A1-2013/034825
- FR-A1- 2 973 081

## Description

### Arrière-plan de l'invention

La présente invention concerne le domaine de la régulation de débits de fluide, et en particulier la régulation de très petits débits tels que ceux d'alimentation en gaz propulsif de propulseurs électriques spatiaux.

Un moyen connu par la personne du métier pour la régulation d'un tel débit est le dispositif connu comme « thermocapillaire », c'est-à-dire un conduit capillaire électriquement conducteur pouvant être connecté à une source de courant électrique. Un tel courant électrique traversant le conduit capillaire va provoquer un réchauffement de celui-ci par effet Joule, réchauffement qui va modifier la perte de charge due au conduit capillaire, et donc le débit massique de fluide traversant le conduit capillaire pour une pression d'alimentation déterminée.

Toutefois, un inconvénient important des dispositifs thermocapillaires connus est qu'ils ne permettent pas de faire varier le débit de fluide que sur une plage très limitée, en particulier lorsque la pression d'alimentation est constante.

### Objet et résumé de l'invention

La présente divulgation vise à remédier à ces inconvénients en proposant un dispositif de régulation de débit qui permette de réguler des très petits débits de fluide avec grande précision, sur des plages relativement larges.

Ce but est atteint grâce au fait que ce dispositif de régulation de débit comprend une chambre amont, une chambre aval, une pluralité de conduits capillaires électriquement conducteurs, reliant fluidiquement en parallèle la chambre amont et la chambre aval, une première et une deuxième borne électrique aptes à être reliées à une source de courant électrique, et au moins un commutateur électrique disposé de manière à connecter sélectivement un ou plusieurs desdits conduits capillaires entre les bornes électriques.

Grâce à la disposition d'une pluralité de conduits capillaires en parallèle et à l'activation sélective des conduits individuels, il est possible d'élargir très sensiblement la plage sur laquelle le débit de fluide va pouvoir être régulé, par rapport à un système dans lequel tout le débit traverse un seul conduit capillaire pouvant être chauffé par effet Joule.

Afin de simplifier la régulation du courant circulant entre les deux bornes électriques, et donc du réchauffement des conduits capillaires et du débit, ledit au moins un commutateur électrique peut être disposé de manière à connecter sélectivement, entre les bornes électriques, un desdits conduits capillaires ou plusieurs desdits conduits capillaires en série. En particulier, pour élargir la plage de régulation du débit, le dispositif de régulation de débit peut comprendre au moins trois desdits conduits capillaires et une pluralité de commutateurs électriques disposés de manière à permettre la sélection d'un nombre desdits conduits capillaires à connecter en série entre les bornes électriques.

Pour obtenir ces résultats avec un circuit électrique particulièrement simple, le dispositif de régulation de débit peut comprendre au moins un commutateur électrique connecté à l'un desdits conduits capillaires et apte à être commuté entre une connexion électrique à un autre desdits conduits capillaires et une connexion électrique à une desdites bornes électriques. En particulier, une première extrémité d'un premier conduit capillaire peut être connectée à la première borne électrique, une première extrémité d'un deuxième conduit capillaire être connectée à la deuxième borne électrique, et un commutateur électrique, connecté à une deuxième extrémité du premier conduit capillaire, être apte à être commuté entre une connexion électrique à la deuxième borne électrique et une connexion électrique à une deuxième extrémité du deuxième conduit capillaire. Ainsi, la commutation de ce commutateur électrique permet d'insérer ou exclure le deuxième conduit électrique du circuit électrique formé entre les deux bornes.

Le dispositif de régulation de débit suivant la présente divulgation est particulièrement utile pour la régulation de très petits débits de gaz avec précision et fiabilité dans des environnements particulièrement difficiles. Ainsi, la présente divulgation concerne notamment aussi un système d'alimentation en gaz propulsif, tel que par exemple du xénon, d'un propulseur électrique spatial, comme par exemple un propulseur à effet Hall, comprenant au moins un tel dispositif de régulation de débit pour réguler un débit dudit gaz propulsif, ainsi qu'un propulseur électrique spatial comprenant un tel système d'alimentation en gaz propulsif.

La présente divulgation concerne aussi un procédé de régulation de débit de fluide entre une chambre amont et une chambre aval, dans lequel au moins un commutateur électrique connecte sélectivement entre deux bornes électriques un ou plusieurs conduits capillaires parmi une pluralité de conduits capillaires électriquement conducteurs reliant fluidiquement en parallèle la chambre amont et la chambre aval, afin de chauffer par effet Joule le ou les conduits capillaires ainsi connecté électriquement entre les deux bornes électriques, afin de réguler un débit de fluide circulant, à travers la pluralité de conduits capillaires, de la chambre amont à la chambre aval. Plusieurs desdits conduits capillaires peuvent ainsi être connectés électriquement en série entre les deux bornes électriques pour réguler le débit de fluide. Le courant circulant entre les deux bornes électriques est aussi régulé pour réguler le débit de fluide circulant à travers la pluralité de conduits capillaires.

### Brève description des dessins

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 illustre schématiquement un exemple de propulseur spatial électrique ; et
- les figures 2A à 2E illustrent schématiquement un dispositif de régulation de débit suivant un mode de réalisation dans cinq modes de fonctionnement différents.

### Description détaillée de l'invention

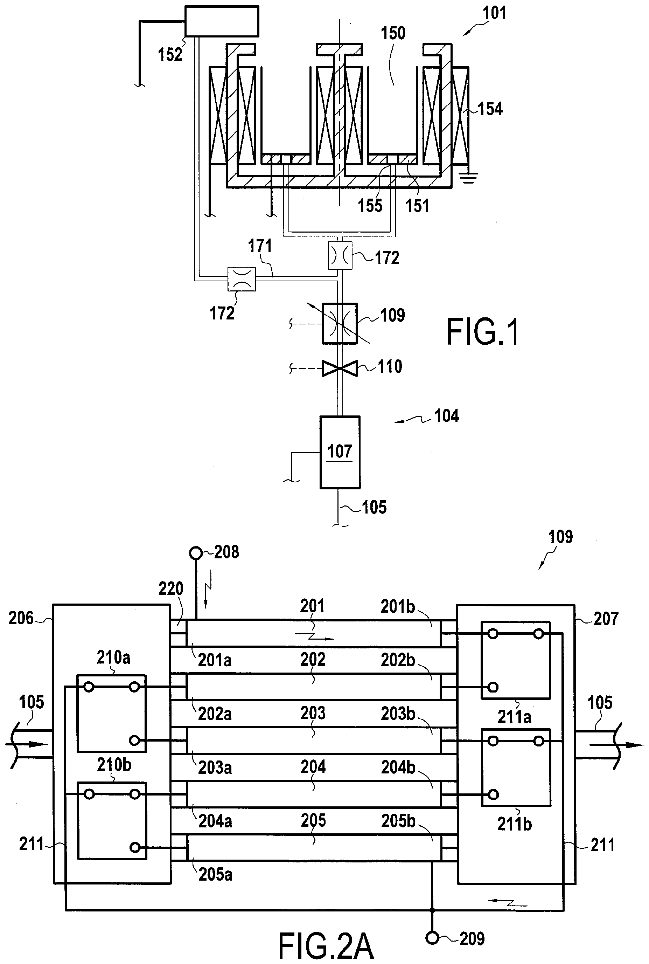

La figure 1 illustre un propulseur spatial électrique 101. Le propulseur 101, qui est plus spécifiquement un propulseur électrostatique à effet Hall, comprend un canal 150 à section annulaire, fermé à son extrémité amont et ouvert à son extrémité aval, une anode 151 située à l'extrémité amont du canal 150, une cathode émettrice 152, située en aval de l'extrémité aval du canal 150 et équipée d'au moins un élément chauffant 153, des électroaimants 154, situés radialement à l'intérieur et à l'extérieur du canal 150, et des injecteurs 155 de fluide propulsif, situées à l'extrémité amont du canal 150. Un tel propulseur 101 est particulièrement applicable pour la commande de trajectoire et orientation d'un engin spatial, tel qu'un satellite, une sonde ou un étage supérieur de lanceur. Il permet d'obtenir des impulsions spécifiques très élevées (de l'ordre de 1500 à 2000 secondes) et donc une consommation très faible de gaz propulsif. Toutefois, leur poussée maximale est pour l'instant assez limitée.

Comme on peut aussi voir sur la figure 1, le propulseur 101 comprend aussi un système 104 d'alimentation en fluide propulsif (par exemple, en xénon) avec une ligne 105 d'alimentation du propulseur électrostatique 101 en gaz propulsif connectée aux injecteurs 155 du propulseur électrostatique 101. Sur la ligne 105 est installé un régulateur 107 de pression d'alimentation du propulseur électrostatique 101 en gaz propulsif. Ce régulateur de pression 107 permet ainsi d'assurer des pressions sensiblement constantes d'alimentation des deux propulseurs, même quand la pression d'alimentation en amont varie fortement.

Une vanne tout-ou-rien 110 et un dispositif de régulation de débit 109 sont également installés en série sur la ligne 105 d'alimentation du propulseur électrostatique 101 en gaz propulsif, en aval du régulateur de pression 107 mais encore en amont des injecteurs 155 de fluide propulsif dans le propulseur électrostatique 101. La vanne tout-ou-rien 110 sert à commander l'alimentation du propulseur électrostatique en gaz propulsif, tandis que le dispositif de régulation de débit 109 sert à réguler son débit. Par ailleurs, le circuit 104 d'alimentation en fluide propulsif 104, comprend aussi une dérivation 171 reliant la ligne 105 en aval du régulateur de débit 109 à la cathode 152, afin d'apporter un débit très restreint de gaz à cette cathode 152, qui est une cathode creuse, de manière à faciliter l'émission d'électrons à partir de la cathode 152, ainsi que son refroidissement. Des étranglements 172 sur cette dérivation 171 et en amont des injecteurs 155 restreint le débit de gaz propulsif fourni à la cathode 152 par rapport à celui qui est injecté à travers les injecteurs 155.

Le dispositif de régulation de débit 109 doit normalement être apte à réguler un débit massique d'alimentation en gaz propulsif très faible, de l'ordre de quelques mg/s. Pour cela, la personne du métier utilise normalement des dispositifs de régulation de débit du type dit « thermocapillaire » ou « thermorestricteur », dans lequel le gaz traverse un conduit capillaire connecté à une source de courant pour réguler le débit de gaz en chauffant le conduit capillaire par effet Joule. En pratique, toutefois, ces dispositifs de régulation de débit de l'état de la technique ne permettent de faire varier le débit que sur des plages assez étroites, surtout quand la pression d'alimentation est constante. Ainsi, le dispositif de régulation de débit utilisé dans le propulseur à effet Hall PPS® 1350, avec une pression d'alimentation en xénon de 265 kPa, ne peut faire varier le débit que sur une plage de 4 à 8 mg/s. Bien que ceci soit suffisant pour ce propulseur à effet Hall existant, qui est optimisé pour un point de fonctionnement unique, à 1,5 kW de puissance et 350 V de tension électrique entre l'anode et la cathode, c'est nettement insuffisant pour des propulseurs électrostatiques envisagés pour un fonctionnement sur des larges plages de puissance et poussée, et nécessitant donc la régulation de débits de gaz propulsif pouvant varier, par exemple, entre 10 et 17 mg/s ou même entre 17 et 50 mg/s.

Pour répondre à ce besoin, le dispositif de régulation de débit 109 suivant un mode de réalisation, illustré en détail sur les figures 2A à 2E, comprend cinq conduits capillaires 201 à 205, reliant fluidiquement en parallèle une chambre amont 206 à une chambre aval 207. La chambre amont 206 est destinée à recevoir du gaz propulsif provenant d'une source de gaz propulsif à travers la ligne d'alimentation 105, en aval du régulateur de pression 107 et de la vanne tout-ou-rien 110, tandis que la chambre aval 207 est destinée à être connectée en amont des injecteurs 155, pour les alimenter en gaz propulsif à débit et pression régulés.

Les conduits capillaires 201 à 205 sont aussi électriquement conducteurs, et le dispositif de régulation de débit 109 comprend aussi une première borne électrique 208, connectée à une première extrémité 201a du conduit capillaire 201 adjacente à la chambre amont 206, une deuxième borne électrique 209, connectée à une deuxième extrémité 205b du conduit capillaire 205 adjacente à la chambre aval 207, ainsi qu'à des circuits électriques 210,211 situés, respectivement, sur les chambres amont 206 et aval 207. Des embouts isolants 220 peuvent être interposés entre les extrémités des conduits capillaires 201 à 205 et les chambres amont et aval 206, 207 afin d'isoler ces extrémités des circuits 210, 211 et entre elles. Les bornes électriques 208, 209 peuvent être connectées à une source de courant électrique, et en particulier à une source de courant électrique variable.

Le circuit 210 comprend deux commutateurs 210a et 210b, et le circuit 211 comprend deux autres commutateurs 211a et 211b. Le commutateur 210a est connecté à l'extrémité 202a du conduit capillaire 202, et est configuré de manière à pouvoir commuter entre une connexion à l'extrémité 203a du conduit capillaire 203 et une connexion à la deuxième borne électrique 209. Similairement, le commutateur 210b est connecté à l'extrémité 204a du conduit capillaire 204, et est configuré de manière à pouvoir commuter entre une connexion à l'extrémité 205a du conduit capillaire 205 et une connexion à la deuxième borne électrique 209. Sur le circuit 211, le commutateur 211a est connecté à l'extrémité 201b du conduit capillaire 201, et est configuré de manière à pouvoir commuter entre une connexion à l'extrémité 202b du conduit capillaire 202 et une connexion à la deuxième borne électrique 209. Similairement, le commutateur 211b est connecté à l'extrémité 203b du conduit capillaire 203, et est configuré de manière à pouvoir commuter entre une connexion à l'extrémité 204a du conduit capillaire 204 et une connexion à la deuxième borne électrique 209.

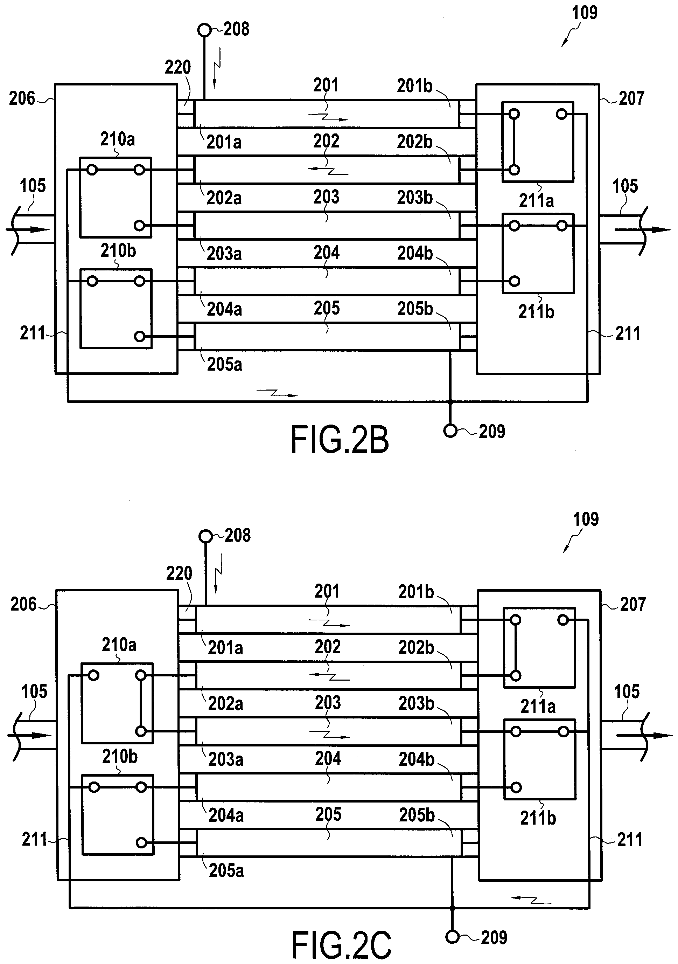

Les commutateurs 210a, 210b et 211a, 211b permettent ainsi de sélectionner un nombre de conduits capillaires, parmi les cinq conduits capillaires 201 à 205, à connecter électriquement en série entre la première et la deuxième borne électrique 208, 209. Ainsi, dans la configuration illustrée sur la figure 2A, le commutateur 211a connecte l'extrémité 201b du conduit capillaire 201 à la deuxième borne électrique 209. De cette manière, indépendamment des positions des autres commutateurs, uniquement le conduit capillaire 201 est connecté entre les deux bornes électriques 208, 209, et un courant électrique circulant entre ces deux bornes 208, 209 ne circulera qu'à travers ce conduit capillaire 201, parmi l'ensemble des conduits capillaires 201 à 205, chauffant ce conduit capillaire 201 pour réguler le débit de gaz. Par contre, dans la configuration illustrée sur la figure 2B, le commutateur 211a connecte l'extrémité 201b du conduit capillaire 201 à l'extrémité adjacente 202b du conduit capillaire 202. Le commutateur 210a connecte l'autre extrémité 202a du conduit capillaire 202 à la deuxième borne 209, de telle manière qu'indépendamment des positions des commutateurs restants, uniquement les conduits capillaires 201 et 202 sont connectés, en série, entre la première et la deuxième borne électrique 208, 209, et un courant électrique circulant entre ces deux bornes 208, 209 circulera uniquement à travers ces conduits capillaires 201, 202, parmi l'ensemble des conduits capillaires 201 à 205, chauffant ces conduits capillaires 201, 202 pour réguler le débit de gaz.

Dans la configuration illustrée sur la figure 2C, le commutateur 211a connecte l'extrémité 201b du conduit capillaire 201 à l'extrémité adjacente 202b du conduit capillaire 202, tandis que le commutateur 210a connecte l'autre extrémité 202a du conduit capillaire 202 à l'extrémité adjacente 203a du conduit capillaire 203, connectant ainsi les trois conduits capillaires 201,202,203 en série. D'autre part, le commutateur 211b connecte l'extrémité 203b du conduit capillaire 203 à la deuxième borne électrique 209, de telle manière qu'indépendamment de la position du commutateur 210b, uniquement les conduits capillaires 201, 202 et 203 sont connectés, en série, entre la première et la deuxième borne électrique 208, 209, et un courant électrique circulant entre ces deux bornes 208, 209 circulera uniquement à travers ces conduits capillaires 201, 202 et 203 parmi l'ensemble des conduits capillaires 201 à 205, chauffant ces conduits capillaires 201, 202 et 203 pour réguler le débit de gaz.

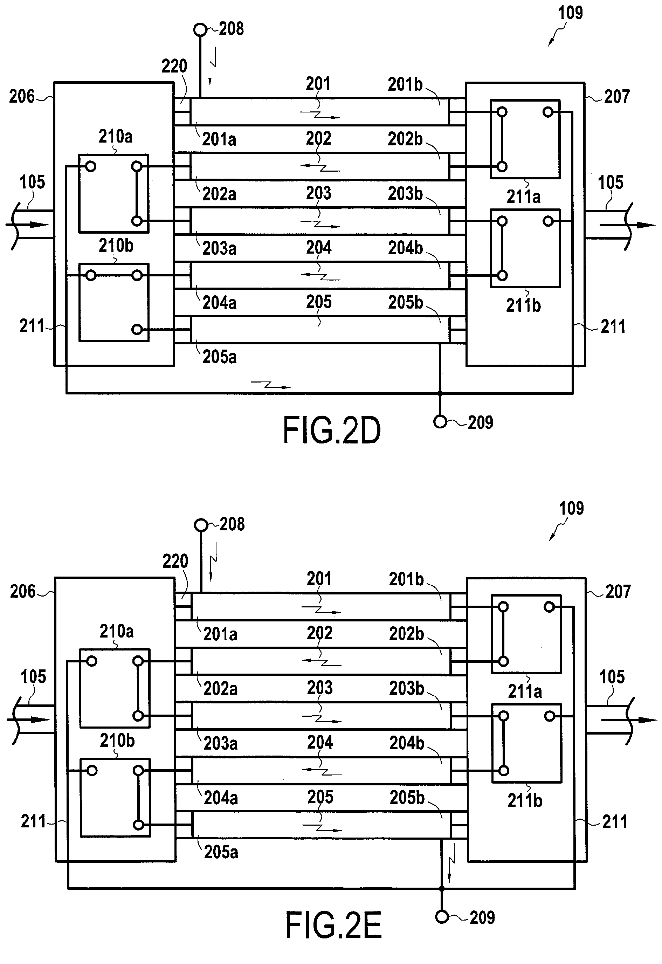

Dans la configuration illustrée sur la figure 2D, le commutateur 211a connecte l'extrémité 201b du conduit capillaire 201 à l'extrémité adjacente 202b du conduit capillaire 202, le commutateur 210a connecte l'autre extrémité 202a du conduit capillaire 202 à l'extrémité adjacente 203a du conduit capillaire 203, et le commutateur 211b connecte l'autre extrémité 203b du conduit capillaire 203 à l'extrémité adjacente 204b du conduit capillaire 204, connectant ainsi les quatre conduits capillaires 201 à 204 en série. D'autre part, le commutateur 210b connecte l'extrémité 204a du conduit capillaire 204 à la deuxième borne électrique 209, de telle manière qu'uniquement les conduits capillaires 201, 202, 203 et 204 sont connectés, en série, entre la première et la deuxième borne électrique 208, 209, et un courant électrique circulant entre ces deux bornes 208, 209 circulera uniquement à travers ces conduits capillaires 201, 202, 203 et 204 parmi l'ensemble des conduits capillaires 201 à 205, chauffant ces conduits capillaires 201, 202, 203 et 204 pour réguler le débit de gaz.

Finalement, dans la configuration illustré sur la figure 2E, le commutateur 211a connecte l'extrémité 201b du conduit capillaire 201 à l'extrémité adjacente 202b du conduit capillaire 202, le commutateur 210a connecte l'autre extrémité 202a du conduit capillaire 202 à l'extrémité adjacente 203a du conduit capillaire 203, le commutateur 211b connecte l'autre extrémité 203b du conduit capillaire 203 à l'extrémité adjacente 204b du conduit capillaire 204, et le commutateur 210a connecte l'autre extrémité 204a du conduit capillaire 204 à l'extrémité adjacente 205a du conduit capillaire 205, connectant ainsi les cinq conduits capillaires 201 à 205 en série, de telle manière qu'un courant électrique circulant entre ces deux bornes 208, 209 circulera à travers les cinq conduits capillaires 201 à 205, chauffant tous ces conduits capillaires 201 à 205 pour réguler le débit de gaz.

Ainsi, en connectant sélectivement entre les deux bornes électriques 208,209, avec les commutateurs 210a,210b,211a et 211b, un ou plusieurs conduits capillaires parmi les cinq conduits capillaires 201 à 205 reliant fluidiquement en parallèle la chambre amont et la chambre aval, on peut chauffer par effet Joule le ou les conduits capillaires ainsi sélectionnés, pour réguler, à travers le nombre de conduits capillaires chauffés, le débit de gaz circulant de la chambre amont 206 à la chambre aval 207 à travers l'ensemble des conduits capillaires 201. Une régulation du courant électrique circulant entre les deux bornes électriques 208,209 peut aussi contribuer à la régulation précise du débit de gaz.

Ainsi, un dispositif de régulation de débit tel que celui illustré, avec cinq conduits capillaires, chacun équivalent à celui utilisé pour le propulseur PPS® 1350, alimenté en gaz xénon à 265 kPa, et en courant électrique régulé sur une plage entre 0,5 et 3 A, peut réguler le débit du gaz entre 78 et 68 mg/s dans la configuration illustrée sur la fig. 2A, entre 75 à 55 mg/s dans la configuration illustrée sur la fig. 2B, entre 71 et 43 mg/s dans la configuration illustrée sur la figure 2C, entre 68 et 30 mg/s dans la configuration illustrée sur la figure 2D, et entre 64 et 17 mg/s dans la configuration illustrée sur la figure 2E, résultant de cette manière en une plage de régulation globale allant de 17 à 78 mg/s.

Quoique la présente invention ait été décrite en se référant à un exemple de réalisation spécifique, il est évident que des différentes modifications et changements peuvent être effectués sur cet exemple sans sortir de la portée générale de l'invention telle que définie par les revendications. Par exemple, le nombre de conduits capillaires peut être inférieur ou supérieur à cinq. En outre, l'arrangement des commutateurs peut varier tant qu'il permette la alimentation électrique sélective d'un ou plusieurs sous-ensembles de conduits capillaires parmi leur ensemble. Par conséquent, la description et les dessins doivent être considérés dans un sens illustratif plutôt que restrictif.

## Revendications

1. Dispositif de régulation de débit (109) comprenant :
une chambre amont (206) ;
une chambre aval (207) ;
une pluralité de conduits capillaires (201-205) électriquement conducteurs, reliant fluidiquement en parallèle la chambre amont (206) et la chambre aval (207) ;
une première et une deuxième borne électrique (208,209) aptes à être reliées à une source de courant électrique ; et
au moins un commutateur électrique (210a,210b,211a,211b) disposé de manière à connecter sélectivement un ou plusieurs desdits conduits capillaires (201-205) entre les bornes électriques (208,209).

2. Dispositif de régulation de débit (109) suivant la revendication 1, dans lequel ledit au moins un commutateur électrique (210a,210b,211a,211b) est disposé de manière à connecter sélectivement, entre les bornes électriques (208,209), un desdits conduits capillaires (201-205) ou plusieurs desdits conduits capillaires (201-205) en série.

3. Dispositif de régulation de débit (109) suivant la revendication 2, comprenant au moins trois desdits conduits capillaires (201-205) et une pluralité de commutateurs électriques (210a,210b,211a,211b) disposés de manière à permettre la sélection d'un nombre desdits conduits capillaires (201-205) à connecter en série entre les bornes électriques (208,209).

4. Dispositif de régulation de débit (109) suivant l'une quelconque des revendications précédentes, comprenant au moins un commutateur électrique (210a,210b,211a,211b) connecté à l'un desdits conduits capillaires (201-205) et apte à être commuté entre une connexion électrique à un autre desdits conduits capillaires (201-205) et une connexion électrique à une desdites bornes électriques (208,209).

5. Dispositif de régulation de débit (109) suivant la revendication 4, dans lequel une première extrémité (201a) d'un premier conduit capillaire (201) est connectée à la première borne électrique (208), une première extrémité (202a) d'un deuxième conduit capillaire (202) est connectée à la deuxième borne électrique (209), et un commutateur électrique (211a), connecté à une deuxième extrémité (201b) du premier conduit capillaire (201), est apte à être commuté entre une connexion électrique à la deuxième borne électrique (209) et une connexion électrique à une deuxième extrémité (202b) du deuxième conduit capillaire (202).

6. Système d'alimentation en gaz propulsif d'un propulseur électrique spatial (101), comprenant au moins un dispositif de régulation de débit (109) suivant l'une quelconque des revendications précédentes pour réguler un débit dudit gaz propulsif.

7. Propulseur électrique spatial (101) comprenant un système d'alimentation en gaz propulsif suivant la revendication 6.

8. Procédé de régulation de débit de fluide entre une chambre amont (206) et une chambre aval (207), dans lequel au moins un commutateur électrique (210a,210b,211a,211b) connecte sélectivement entre deux bornes électriques (208,209) un ou plusieurs conduits capillaires parmi une pluralité de conduits capillaires (201-205) électriquement conducteurs reliant fluidiquement en parallèle la chambre amont (206) et la chambre aval (207), afin de chauffer par effet Joule le ou les conduits capillaires (201-205) ainsi connectés électriquement entre les deux bornes électriques (208,209), pour réguler un débit de fluide circulant, à travers la pluralité de conduits capillaires (201-205), de la chambre amont (206) à la chambre aval (207).

9. Procédé de régulation de débit de fluide suivant la revendication 8, dans lequel plusieurs desdits conduits capillaires (201-205) sont connectés électriquement en série entre les deux bornes électriques (208,209) pour réguler le débit de fluide.

10. Procédé de régulation de débit de fluide suivant l'une quelconque des revendications 8 à 9, dans lequel le courant circulant entre les deux bornes électriques (208,209) est aussi régulé pour réguler le débit de fluide circulant à travers la pluralité de conduits capillaires (201-205).

## Patentansprüche

1. Vorrichtung zur Durchflussmengenregelung (109), umfassend:
eine stromaufwärtige Kammer (206);
eine stromabwärtige Kammer (207);
eine Vielzahl von elektrisch leitenden Kapillarleitungen (201-205), welche die stromaufwärtige Kammer (206) und die stromabwärtige Kammer (207) parallel fluidisch miteinander verbinden,
einen ersten und einen zweiten elektrischen Anschluss (208, 209), die geeignet sind, mit einer elektrischen Stromquelle verbunden zu werden, und
wenigstens einen elektrischen Schalter (210a, 210b, 211a, 211b), der so angeordnet ist, dass eine oder mehrere der Kapillarleitungen (201-205) zwischen den elektrischen Anschlüssen (208, 209) selektiv verbunden werden.

2. Vorrichtung zur Durchflussmengenregelung (109) nach Anspruch 1, bei der der wenigstens eine elektrische Schalter (210a, 210b, 211a, 211b) so angeordnet ist, dass zwischen den elektrischen Anschlüssen (208, 209) eine der Kapillarleitungen (201-205) oder mehrere der Kapillarleitungen (201-205) selektiv in Reihe geschaltet werden.

3. Vorrichtung zur Durchflussmengenregelung (109) nach Anspruch 2, umfassend wenigstens drei der Kapillarleitungen (201-205) und eine Vielzahl von elektrischen Schaltern (210a, 210b, 211a, 211b), die so angeordnet sind, dass sie die Auswahl einer Anzahl der Kapillarleitungen (201-205), die zwischen den elektrischen Anschlüssen (208, 209) in Reihe zu schalten sind, ermöglicht.

4. Vorrichtung zur Durchflussmengenregelung (109) nach einem der vorhergehenden Ansprüche, umfassend wenigstens einen elektrischen Schalter (210a, 210b, 211a, 211b), der mit einer der Kapillarleitungen (201-205) verbunden und geeignet ist, zwischen einer elektrischen Verbindung mit einer anderen der Kapillarleitungen (201-205) und einer elektrischen Verbindung mit einem der elektrischen Anschlüsse (208, 209) umgeschaltet zu werden.

5. Vorrichtung zur Durchflussmengenregelung (109) nach Anspruch 4, bei der ein erstes Ende (201a) einer ersten Kapillarleitung (201) mit dem ersten elektrischen Anschluss (208) verbunden ist, ein erstes Ende (202a) von einer zweiten Kapillarleitung (202) mit dem zweiten elektrischen Anschluss (209) verbunden ist und ein elektrischer Schalter (211a), der mit einem zweiten Ende (201b) der ersten Kapillarleitung (201) verbunden ist, geeignet ist, zwischen einer elektrischen Verbindung mit dem zweiten elektrischen Anschluss (209) und einer elektrischen Verbindung mit einem zweiten Ende (202b) der zweiten Kapillarleitung (202) umgeschaltet zu werden.

6. System zur Versorgung eines elektrischen Raumfahrtantriebs (101) mit Treibgas, umfassend wenigstens eine Vorrichtung zur Durchflussmengenregelung (109) nach einem der vorhergehenden Ansprüche zur Regelung einer Durchflussmenge des Treibgases.

7. Elektrischer Raumfahrtantrieb (101), der ein System zur Versorgung mit Treibgas nach Anspruch 6 umfasst.

8. Verfahren zur Regelung einer Fluiddurchflussmenge zwischen einer stromaufwärtigen Kammer (206) und einer stromabwärtigen Kammer (207), wobei wenigstens ein elektrischer Schalter (210a, 210b, 211a, 211b) zwischen zwei elektrischen Anschlüssen (208, 209) eine oder mehrere Kapillarleitungen aus einer Vielzahl von elektrisch leitenden Kapillarleitungen (201-205), welche die stromaufwärtige Kammer (206) und die stromabwärtige Kammer (207) parallel fluidisch miteinander verbinden, selektiv verbindet, um die so zwischen den beiden elektrischen Anschlüssen (208, 209) elektrisch verbundene(n) Kapillarleitung oder -leitungen (201-205) durch Joule-Effekt zu erwärmen, um eine Durchflussmenge eines durch die Vielzahl von Kapillarleitungen (201 - 205) von der stromaufwärtigen Kammer (206) zur stromabwärtigen Kammer (207) zirkulierenden Fluids zu regeln.

9. Verfahren zur Regelung einer Fluiddurchflussmenge nach Anspruch 8, wobei mehrere der Kapillarleitungen (201-205) zwischen den beiden elektrischen Anschlüssen (208, 209) elektrisch in Reihe geschaltet sind, um die Fluiddurchflussmenge zu regeln.

10. Verfahren zur Regelung einer Fluiddurchflussmenge nach einem der Ansprüche 8 bis 9, wobei der Strom, der zwischen den beiden elektrischen Anschlüssen (208, 209) fließt, auch geregelt wird, um die Fluiddurchflussmenge, welche durch die Vielzahl von Kapillarleitungen (201-205) fließt, zu regeln.

## Claims

1. A flow rate regulator device (109) comprising:
an upstream chamber (206);
a downstream chamber (207);
a plurality of electrically conductive capillary ducts (201-205) providing parallel fluid flow connections between the upstream chamber (206) and the downstream chamber (207);
first and second electrical terminals (208, 209) suitable for being connected to an electric current source; and
at least one electric switch (210a, 210b, 211a, 211b) arranged so as to connect one or more of said capillary ducts (201-205) selectively between the electrical terminals (208, 209).

2. A flow rate regulator device (109) according to claim 1, wherein said at least one electric switch (210a, 210b, 211a, 211b) is arranged so as to connect one of said capillary ducts (201-205) or a plurality of said capillary ducts (201-205) in series selectively between the electrical terminals (208, 209).

3. A flow rate regulator device (109) according to claim 2, comprising at least three said capillary ducts (201-205) and a plurality of electric switches (210a, 210b, 211a, 211b) arranged to select the number of said capillary ducts (201-205) that are to be connected in series between the electrical terminals (208, 209).

4. A flow rate regulator device (109) according to any one of the preceding claims, including at least one electric switch (210a, 210b, 211a, 211b) connected to one of said capillary ducts (201-205) and suitable for being switched between an electrical connection to another one of said capillary ducts (201-205) and an electrical connection to one of said electrical terminals (208, 209) .

5. A flow rate regulator device (109) according to claim 4, wherein a first end (201a) of a first capillary duct (201) is connected to the first electrical terminal (208), a first end (202a) of a second capillary duct (202) is connected to the second electrical terminal (209), and an electric switch (211a) connected to a second end (201b) of the first capillary duct (201) is suitable for being switched between an electrical connection to the second electrical terminal (209) and an electrical connection to a second end (202b) of the second capillary duct (202).

6. A system for feeding propellant gas to a space electric thruster (101), the system including at least one flow rate regulator device (109) according to any one of the preceding claims for regulating a flow rate of said propellant gas.

7. A space electric thruster (101) including a propellant gas feed system according to claim 6.

8. A method of regulating fluid flow rate between an upstream chamber (206) and a downstream chamber (207), wherein at least one electric switch (210a, 210b, 211a, 211b) selectively connects between two electrical terminals (208, 209) one or more capillary ducts from a plurality of electrically conductive capillary ducts (201-205) providing fluid flow connections in parallel between the upstream chamber (206) and the downstream chamber (207) in order to use the Joule effect to heat the capillary ducts (201-205) as electrically connected in this way between the two electrical terminals (208, 209), in order to regulate a fluid flow rate passing via the plurality of capillary ducts (201-205) from the upstream chamber (206) to the downstream chamber (207).

9. A method of regulating fluid flow rate according to claim 8, wherein a plurality of said capillary ducts (201-205) are electrically connected in series between the two electrical terminals (208, 209) in order to regulate the fluid flow rate.

10. A method of regulating fluid flow rate according to any one of claims 8 or 9, wherein the current flowing between the two electrical terminals (208, 209) is also regulated in order to regulate the flow rate of fluid passing via the plurality of capillary ducts (201-205).
